(19) **Europäisches Patentamt / European Patent Office / Office européen des brevets**

(11) **EP 1 358 584 B1**

(12) **EUROPEAN PATENT SPECIFICATION**

(45) Date of publication and mention
of the grant of the patent:
**27.07.2011 Bulletin 2011/30**

(51) Int Cl.:
***G06F 17/30*** (2006.01)

(21) Application number: **02703292.9**

(22) Date of filing: **29.01.2002**

(86) International application number:
**PCT/US2002/002717**

(87) International publication number:
**WO 2002/061628 (08.08.2002 Gazette 2002/32)**

(54) **AN ADAPTIVE DOCUMENT RANKING METHOD BASED ON USER BEHAVIOR**

ADAPTIVES DOKUMENTEINSTUFUNGSVERFAHREN AUF DER BASIS DES
BENUTZERVERHALTENS

PROCEDE ADAPTATIF DE CLASSEMENT DE DOCUMENTS FONDE SUR LE COMPORTEMENT
DES UTILISATEURS

(84) Designated Contracting States:
**AT BE CH CY DE DK ES FI FR GB GR IE IT LI LU
MC NL PT SE TR**

(30) Priority: **01.02.2001 US 775715**

(43) Date of publication of application:
**05.11.2003 Bulletin 2003/45**

(73) Proprietor: **Verity, Inc.
Sunnyvale, CA 94089 (US)**

(72) Inventors:
• **ABROL, Mani, S.
San Jose, CA 95120 (US)**
• **JOHNSON, Brett, M.
Sunnyvale, CA 94087 (US)**

(74) Representative: **Betten & Resch
Patentanwälte
Theatinerstrasse 8
80333 München (DE)**

(56) References cited:
JP-A- 2000 242 647    US-A- 5 787 424
US-A- 5 855 015       US-A- 5 899 999
US-A- 5 987 457

• **SALTON G ET AL: "IMPROVING RETRIEVAL PERFORMANCE BY RELEVANCE FEEDBACK" JOURNAL OF THE AMERICAN SOCIETY FOR INFORMATION SCIENCE, AMERICAN SOCIETY FOR INFORMATION. WASHINGTON, US, vol. 41, no. 4, June 1990 (1990-06), pages 288-297, XP001028431 ISSN: 0002-8231**
• **LUNDQUIST C ET AL ASSOCIATION FOR COMPUTING MACHINERY: "IMPROVING RELEVANCE FEEDBACK IN THE VECTOR SPACE MODEL" PROCEEDINGS OF THE 6TH. INTERNATIONAL CONFERENCE ON INFORMATION AND KNOWLEDGE MANAGEMENT. CIKM '97. LAS VEGAS, NOV. 10 - 14, 1997, PROCEEDINGS OF THE INTERNATIONAL CONFERENCE ON INFORMATION AND KNOWLEDGE MANAGEMENT. CIKM, NEW YORK, ACM, US, vol. CONF. 6, 10 November 1997 (1997-11-10), pages 16-23, XP000775296 ISBN: 0-89791-970-X**
• **DUNLOP M D: "THE EFFECT OF ACCESSING NONMATCHING DOCUMENTS OF RELEVANCE FEEDBACK" ACM TRANSACTIONS ON INFORMATION SYSTEMS, ACM, NEW YORK, NY, US, vol. 15, no. 2, April 1997 (1997-04), pages 137-153, XP000656074 ISSN: 1046-8188**

**EP 1 358 584 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

Background of the Invention

This invention relates generally to a system and method for ranking the relevance of a document located during a search and in particular to a system and method for ranking the relevance of a document based on user behavior.

In most search systems, a user types in a query consisting of one or more terms. The system then returns a list of documents and some text associated with each document. The documents are typically ordered on the ranks obtained from statistical methods based on the number and positions of the keywords in each document. The text provided with each document could be the document title, a summary, first few lines or any other blurb from the document. The user then examines the list and picks the most relevant documents to view. The ranking process does not typically rank the documents based on the user behavior associated with the documents. It is desirable to provide a ranking system and method that incorporates the user's action of picking certain documents to view into the rank of the documents picked in a novel way so that a subsequent search of the same query terms would yield a higher rank for that document.

JP 2000 242647 A discloses a method for refining an initial query phrase to search for documents of interest to a user. The methods comprises the steps of categorizing at least one document found in a search using the initial query phrase as of interest based upon feedback from the user, categorizing at least one other document found in the search using the initial query phrase as not of interest based upon feedback from the user, generating a list of keywords by analyzing only the categorized documents, ranking as first keywords, the keywords in the list of keywords which occur in only the documents of interest, ranking as second keywords, the keywords in the list of keywords which occur in only the documents not of interest, and forming a refined query phrase to search for documents which include one or more of a plurality of the highest ranked first keywords, and to filter out documents which include any one or more of a plurality of the highest ranked second keywords.

SALTON et al: "IMPROVING RETRIEVAL PERFORMANCE BY RELEVANCE FEEDBACK" JOURNAL OF THE AMERICAN SOCIETY FOR INFORMATION SCIENCE, AMERICAN SOCIETY FOR INFORMATION. WASHINGTON, US, vol. 41, no. 4, June 1990, pages 288-297 discloses relevance feedback methods.

US 5,855,015 discloses a system and method for adaptively traversing a network of linked textual or multi-media information which utilizes one or more heuristics to explore the network and present information to a user.

US 5,899,999 discloses an apparatus and a method for an iterative convolution filter for determining an image signature and particularly, for automatically classifying individual images on a numerical basis to retrieve desired images through a query-by-example paradigm.

US 5,987,457 discloses a method and a system for refining an initial query phrase to search for documents of interest to a user.

Thus, it is desirable to provide an adaptive ranking system and method and it is to this end that the present invention is directed.

Summary of the Invention

A ranking system and method are provided that incorporates the user's action of picking certain documents to view into the rank of the documents picked. This method could also incorporate other actions of a user, such as picking a product to buy from a list obtained from a search. Thus, a subsequent search of the same query terms would yield a higher rank for the product bought by the user.

Thus, in accordance with the invention, a system and method for user behavior based ranking of a document is provided. The system comprises means for determining a feature vector associated with a document wherein the feature vector comprises certain significant terms appearing in the document and their weights which are based on their frequency statistics, and means for modifying the feature vector for the document based on user actions during a query of the document so that the document is more highly ranked in response to the user actions.

In accordance with another aspect of the invention, a system and method for user behavior based searching of a document based on a query having one or more query terms is provided. The system comprises a method of ranking documents in a search wherein the rank of a document to one or more search terms is determined from the feature vector of the document. Since the feature vector of a document is adapted in response to users actions, documents get ranked higher in subsequent searches of the same query terms.

Brief Description of the Drawings

Figure 1 is a diagram illustrating a typical web-based search system that may include the user behavior ranking system in accordance with the invention;

Figure 2 is a diagram illustrating more details of a search engine in accordance with the invention incorporating the user behavior ranking system;

Figure 3 is a flowchart of a typical search method;

Figure 4 is a flowchart illustrating a typical method for calculating a document rank;

Figure 5 is a flowchart illustrating a typical method for retrieving search results based on feature vectors of documents; and

Figure 6 is a flowchart illustrating more details of how the feature vectors of documents are updated after capturing user behavior in accordance with the invention.

Detailed Description of a Preferred Embodiment

The invention is particularly applicable to a web based search system and it is in this context that the invention will be described. It will be appreciated, however, that the ranking system and method in accordance with the invention has greater utility, such as to other types of search systems that are implemented on other different computer systems and other types of search systems that permit other items, such as documents and the like, to be searched.

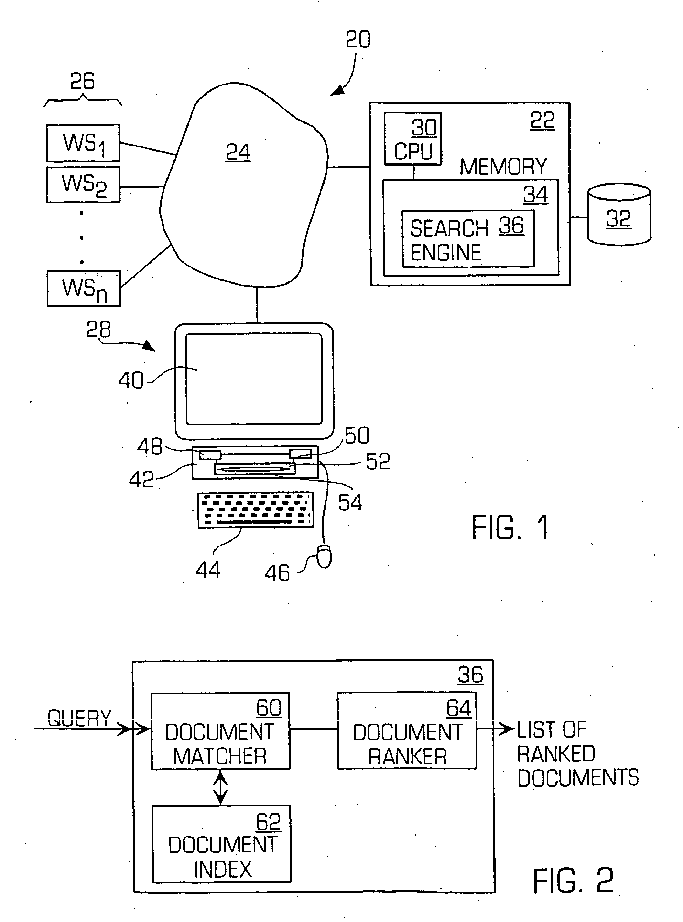

Figure 1 is a diagram illustrating a typical web-based search system 20 that may include the user behavior ranking system in accordance with the invention. The search system may include a search server computer 22 that is connected by a computer network 24, such as a local area network, a wide area network or preferably the Internet or the World Wide Web, to one or more web sites 26 ($WS_1$, $WS_2$, ..., $WS_n$) wherein each web site contain one or more web pages that may be searched using the search server computer. For purposes of this description, each web page associated with a web site may be a document that may be searched by the user. As is well known, a user of a computer 28 (there may actually be one or more computers that execute a browser application to submit queries to the search system) may connect to the search server 22 over the computer network 24 and submit a search query to the search server using a typical protocol, such as HTTP. The search query may include one or more query terms. The search server may retrieve web pages that match those query terms, rank the web pages and return a list of ranked web pages that the user may browse through and select a web page from the list. In accordance with the invention, the user's behavior when he/she receives the ranked list of web pages may be used to change the ranking of the documents during subsequent searches for the same query terms as described below in more detail.

The server computer 22 may include one or more central processing units (CPU) that control the operation of the computer, a persistent storage device 32, such as a hard disk drive, a tape drive, an optical drive of the like, that maintains data even when the power is turned off to the computer and a temporary memory 34, such as DRAM, whose contents are lost when the power is turned off to the computer. As is well known, one or more pieces of software are permanently stored in the persistent storage device 32 and then a particular software application is loaded into the memory 34 when the CPU is executing the particular software application. In the example shown, a search engine software application 36 may be loaded into the memory 34 to perform the operations associated with the search system.

The user computer 28 may include a display device 40, such as a CRT or a LCD, that permits the user to interact with the computer, a chassis 42 and one or more input/output devices that permit the user to interact with the computer and the software being executed by the computer, such as a keyboard 44 and a mouse 46. The chassis 42 may include a central processing unit 48 that controls the operation of the computer, a persistent storage device 50 as described above and a memory 52 as described above. To access the search system over the computer network, to submit a query and to receive a list of ranked documents, the computer 28 may be executing a browser software application 54 that permits the user to interact with the search system using a typical protocol, such as HTTP. In the web-based example shown, the user may be presented with a graphical form to fill in one or more query terms and submit to the server and the server may return a graphical page containing a listing of one or more ranked web pages that the user may select. When the user selects a web page from the list, the user is connected to the web page. Now, the search engine on the server will be described in more detail.

Figure 2 is a diagram illustrating more details of the search engine 36 in accordance with the invention incorporating the user behavior ranking system. The search engine may include one or more pieces of software that provide the functionality of the search engine to the user. In particular, the search engine 36 may receive a query containing one or more query terms. The query may be fed into a document matcher 60 that locates documents/web pages in a document/web page index 62 that match the query terms in the query from the user. The documents/web pages that match the query terms may then be fed into a document ranker 64 that ranks the documents based on user behavior as described below in more detail. The search engine then outputs a list of ranked documents that are displayed to the user. In accordance with the invention, the prior user behavior during the review of the documents by the user may be used to rank the documents retrieved during future searches as described below in more detail. To better understand the user behavior ranking in accordance with the invention, a typical search method will be briefly described.

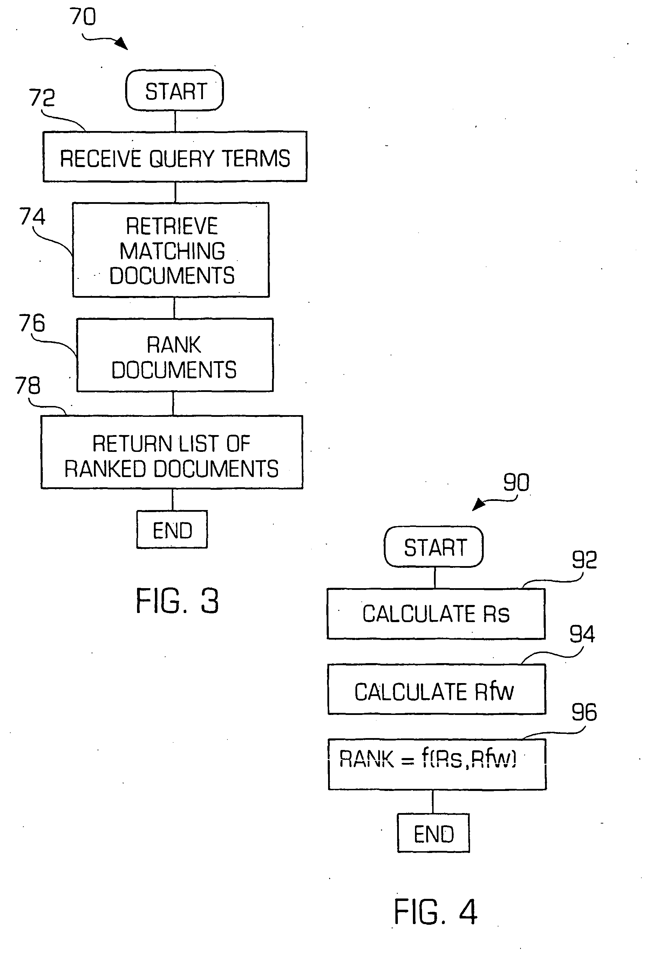

Figure 3 is a flowchart of a typical search method 70. In a first step 72, the server may receive a query from a user containing one or more query terms. In step 74, the search engine may retrieve one or more documents that match the query terms. In step 76, the search engine may rank the document in some manner and then present a list of ranked document to the user in step 78. The reason for the ranked documents is that the search method attempts to rank the documents so that the most relevant documents appear first so that the user may find the most relevant document more rapidly. There are many different ranking techniques that may be used. Now, a method for ranking the documents based on user behavior will now be described in more detail.

Figure 4 is a flowchart illustrating a user behavior ranking method 90 in accordance with the invention wherein each document may be ranked according to the method. The proposed user behavior ranking method is based on two factors. In step 92, $R_s$ is determined for each document wherein $R_s$ is obtained from typical statistical calculations dependent on the number and positions of the keywords in each document as is well known. See Ian H. Witten, Alistair Moffat and Timothy C. Bell. Managing Gigabytes. Van Nostrand Reinhold, New York, 1994 for a summary of these typical statistical methods that may be used to calculate $R_s$. In step 94, $R_{fw}$ is calculated as a distance measure of the query to the feature vector of the document. In particular, certain words and phrases of a document are selected during a feature selection process to form this feature vector. See Yang, Y., Pedersen, J.O., A Comparative Study on Feature Selection in Text Categorization, Proc. of the 14th International Conference on Machine Learning ICML97, pp. 412 - 420, 1997 for a comparative study of different feature selection methods. In accordance with the invention, the $R_{fw}$ value may be changed based on user behavior as described below in more detail. Using these two values/variables, the rank of the document may be calculated as the Rank wherein Rank = $f(R_s, R_{fw})$. Now, more details of the user behavior ranking method in accordance with the invention will be described.

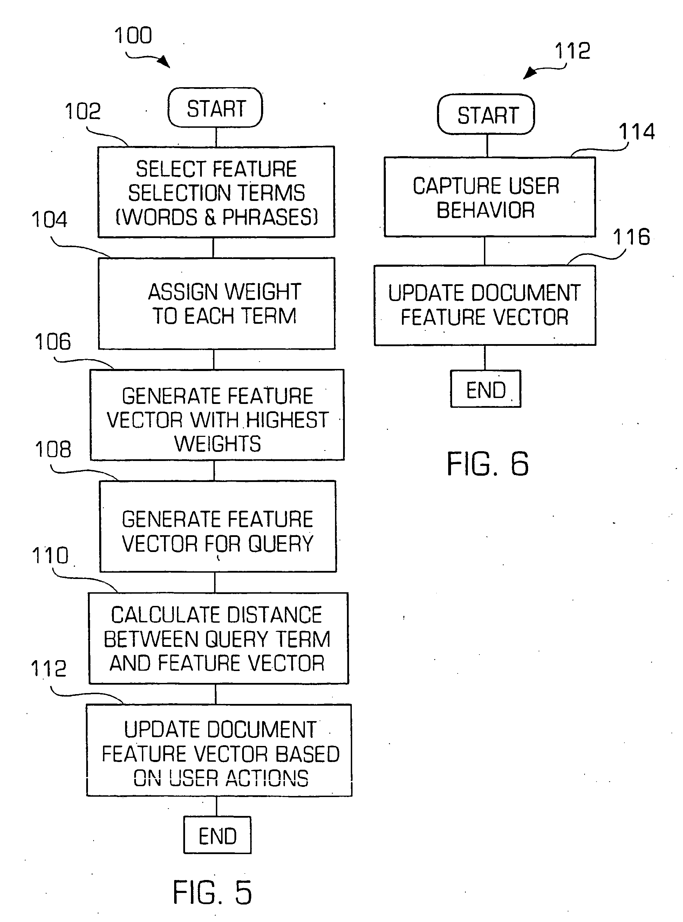

Figure 5 is a flowchart illustrating more details of the user behavior ranking method and in particular a method 100 for calculating the user behavior-based feature vector in accordance with the invention. In particular, in step 102, certain words and phrases of a document are selected through a well known feature selection process to form a feature vector. The article cited above provides an overview of different feature selection methods. Each term is then assigned a weight $w_i$ in step 104 that is calculated from statistical methods based on the term frequency. After calculating the weights of the terms, the number of terms, j, with the highest weights are selected for the feature vector representation of the document in step 106. The feature vector holds a space for each term in the entire corpus of documents so that most feature vectors will be sparse in that few of the spaces in each feature vector will be filled with information. The feature vector is denoted as F = < $w_i$ > where $w_i$ represents the weight of the ith term in document F.

A query, Q, having n terms can also be represented as a feature vector in step 108 in which each element is a keyword in the query so that Q = < $w_{ij}$ >. In step 110, $R_{fw}$ is then calculated as a distance measure of the query term to the feature vector of the document. An example of the distance measure is the cosine or normalized inner product. The weights are normalized at time of feature selection so that $R_{fw} = f(F_i, Q) = \Sigma\, w_{ik}{}^*w_{jk}$; k = 1 to k = t, where t is the total number of terms in the corpus, $w_{ik}$ is the weight of the k th term in the document feature vector $F_i$, and $w_{jk}$ is the weight of the k'th term in the query feature vector Q. See Salton, G., Wong, A. and Yang, S.S., 'A vector space model for automatic indexing', Communications of the ACM, 18, 613-620 (1975) for more details on feature vector representation and similarity measures. In step 112, the feature vector for any document may be updated so that, for future queries with the same query terms, a document may be more highly ranked or less highly ranked based on the user behavior as will now be described.

Figure 6 is a flowchart illustrating more details of the user behavior ranking step 112 in accordance with the invention. In particular, in step 114, users' behavior is monitored and sequences of search queries and documents picked on each search are captured over time. In accordance with the invention, not all user interactions are logged since only carefully chosen samples are taken at certain intervals. Thus, the queries are sampled at a frequency $f_s$, which is small enough so that the system response time does not degrade and large enough to capture enough information from users' behavior. Each sample consists of a query, Q, and a set of documents viewed from the result list whose feature vectors are $F_1$, $F_2$, ... $F_n$. Then, in step 116, for each $F_i$ in the set of documents $F_1$, $F_2$, ... $F_n$, the feature vector is updated by an update function $U()$ to $F_{i\ updated} = U(F_i, Q)$. After this update to the feature vector, all subsequent queries containing the terms of the query Q would yield higher ranks for the documents represented by $F_1$, $F_2$, ... $F_n$.

Now, preferred embodiments for choosing the weights $w_i$ of the terms in the feature vector, the ranking function $f()$, the sampling frequency $f_s$, and the feature vector update function $U()$ are provided.

1. The weight $w_i$ is preferably chosen to be the TFxIDF value of the term which is calculated from the Term Frequency and the Inverted Document Frequency. Salton, G., and C. Burkley. Term-Weighting Approaches in Automatic Text Retrieval. Information Processing and Management, 24(5), pages 513-523, 1988 provide a good description of this well known calculation.

2. The Ranking function, *f()*, depends on the statistical rank calculation $R_s$ and the vector distance measure $R_{fw}$. Examples of this function may include:

$$f(R_s, R_{fw}) = \alpha R_s + (1-\alpha)R_{fw} \text{ such that } 0 <= \alpha <= 1$$

$$f(R_s, R_{fw}) = R_s / R_{fw}$$

3. The sampling frequency, $f_s$, could be determined by one of the following:

- A Simple Random Sampling technique can be implemented such that a small subset, say 1% of all user searches are monitored.

- A systematic random sampling technique could be used. A starting point is chosen, possibly at random and thereafter a sample is picked at a regular interval, for example every 1000th search may be chosen.

4. The Feature vector update function is such that it makes the document come closer to the query in the vector space. A preferred embodiment is

$$U(F_i, Q) = F_i + \xi Q$$

where $\xi$ could be chosen to be any of the following

- $0 < \xi <= 1$ and is constant for all updates.

- $\xi$ is directly proportional to the time spent by the user viewing the document represented by $F_i$ after issuing the query Q except in cases when the viewing time is extremely small or large. Small viewing times could be indications of negative feedback so in that case $\xi$ is negative and extremely large viewing times are not indicative of relevancy $\xi$ is constant in those cases.

- In certain systems users are prompted to rate an article on degree of usefulness and relevancy, in these situations $\xi$ is proportional to that rating.

To better understand the invention, an example of how a feature vector for a document may be modified by user behavior in accordance with the invention will be provided for illustration purposes only. Thus, consider two documents whose feature vector representations are:

D1 = < dog 0.43; cat 0.26; fleas 0.15; collar 0.11, feed 0.09 ...> and

D2 = < pet 0.36; food 0.26; cat 0.12 ...> wherein the frequency of each term in each document is represented by the feature vector. When a user issues a query "cat dog food", the system may return the above two documents, D1 and D2, with initial ranks of 0.85 and 0.79 respectively due to the above feature vectors. In particular, the rank calculation is an inner cosine distance of the two vectors. In this case the query vector would be: Q = < 0.33 cat; 0.33 dog; 0.3 food> so the distance between D1 and Q is (multiply the weights of the common terms) Rd1 = 0.43*0.33 + 0.26*0.33 = 0.85 and the distance between D2 and Q is Rd2 = 0.26*0.33 + 0.12*0.33 = 0.79.

In the result list, the user is presented with the title of these documents and the user picks document D2 to view in more detail. Assuming that this particular search was sampled to update the feature vector, the feature vector of D2 would get modified to D2 = < pet 0.36; food 0.31; cat 0.19, dog 0.05 ...> wherein the weighting for each term in the feature vector that is also in the query is increased to reflect that the user selected document D2 during a prior search. In the future, during any subsequent query containing the same query terms "cat dog food", document D2 is ranked with a higher score due to the updating. Thus, in this example, if the same query is done again, document D2 will get a 0.86 score which is higher than the score for document D1. Thus, document D2 will appear higher in the result list during the subsequent search due to the user behavior updating.

Thus, in accordance with the invention, the rank of a document and therefore its location in the returned list of ranked documents may be altered due to the prior user behavior. Thus, the user behavior ranking system and method in accordance with the invention may take the acts of prior users into account when returning the list of ranked documents to the user. Thus, user behavior ranking in accordance with the invention may permit the documents at the top of the list returned to the user to be more relevant and to be influenced by a user's actions with respect to the returned documents. For example, a document may appear to be very relevant based on its title, etc, but a user may then view the document which will affect the ranking of the document. As another example, a document may not appear to be very relevant based on its title, but many prior users may view the document so that the document may appear closer to the top of the ranked document list that it would in a more typical document ranking system. As yet another example, a user searched for Palm products, but actually bought a Handspring product which was listed on the second page of the search results. Accordingly, the feature vector of the Handspring product is updated. Then, when another user searches for "Palm", they will see the Handspring document listed higher in the search results. In accordance with the invention, the length that a user views a document may also affect the ranking of the document.

While the foregoing has been with reference to a particular embodiment of the invention, it will be appreciated by those skilled in the art that changes in this embodiment may be made without departing from the principles and spirit of the invention, the scope of which is defined by the appended claims.

**Claims**

1.  A system for user behaviour based ranking of a document, comprising:

    means for determining a feature vector associated with a document, the feature vector comprising weights for certain terms that appear in the document; and
    means for modifying the feature vector for the document based on user actions captured during a search session so that the document is more highly ranked in response to the user actions,
    **characterized in that** the system further comprises means for sampling user search behaviour,
    the means for modifying further comprises means for updating the feature vector of the document based on the sampled user search behaviour so that the rank of the document is changed based on the sampled user search behaviour,
    the sampling further comprises instructions for generating a sample of the user behaviour wherein the sample of the user behaviour further comprises a query feature vector of the terms in a particular query and the feature vector of the one or more documents returned based on the query and viewed by the user, and
    the sample generating further comprises instructions for generating a sample during a sampling frequency,
    the updating further comprises instructions for combining the feature vector of the document with a feature vector of the query, the feature vector comprising frequency values for one or more terms that appear in the query,
    the updating further comprises instructions for scaling the query feature vector based on the viewing time of the document by the user during the sampled user behaviour to generate a scaled query feature vector,
    the scaling further comprises instructions for generating a negative scaling factor in response to a short viewing time so that the scaled query feature vector is negative and the feature vector of the document is reduced and the rank of the document is reduced, and
    the scaling further comprises instructions for generating a positive scaling factor in response to a long viewing time so that the scaled query feature vector is positive and the feature vector of the document is increased and the rank of the document is increased.

2.  The system of claim 1 further comprising means for capturing user actions in response to a list of documents produced in response to a query wherein the user actions include selecting a document from the list of documents.

3.  The system of claim 2 further comprises means for adjusting the weights of the terms in the feature vector that match terms in a query that produced the list of documents so that the ranking of the document is higher in response to the adjustment of the weights.

4.  The system of claim 1 further comprising

means for returning the same document to another user with the same query at a higher ranking due to the modified feature vector.

5.  A method for user behaviour based ranking of a document, comprising:

    determining a feature vector associated with a document, the feature vector comprising weights for one or more terms that appear in the document; and
    modifying the feature vector for the document based on user actions captured during a query of the document so that the document is more highly ranked in response to the user actions,
    **characterized in that** the method further comprises sampling user search behaviour; and
    modifying the feature vector for the document further comprises updating the feature vector of the document based on the sampled user search behaviour so that the rank of the document is changed based on the sampled user search behaviour,
    the sampling further comprises generating a sample of the user behaviour wherein the sample of the user behaviour further comprises a query feature vector of the terms in a particular query and the feature vector of the one or more documents returned based on the query and viewed by the user,
    the sample generating further comprises generating a sample during a sampling frequency,
    the updating further comprises combining the feature vector of the document with a feature vector of the query, the feature vector comprising frequency values for one or more terms that appear in the query,
    the updating further comprising scaling the query feature vector based on the viewing time of the document by the user during the sampled user behaviour to generate a scaled query feature vector,
    the scaling further comprises generating a negative scaling factor in response to a short viewing time so that the scaled query feature vector is negative and the feature vector of the document is reduced and the rank of the document is reduced, and
    the scaling further comprises generating a positive scaling factor in response to a long viewing time so that the scaled query feature vector is positive and the feature vector of the document is increased and the rank of the document is increased.

6.  The method of claim 5 further comprising means for capturing user actions in response to a list of documents produced in response to a query wherein the user actions include selecting a document from the list of documents.

7.  The method of claim 6, wherein the modifying means further comprises means for adjusting the frequency values of the terms in the feature vector that match terms in a query that produced the list of documents so that the ranking of the document is higher in response to the adjustment of the frequency values.

8.  The method of claim 5 further comprising
    returning the same document to another user with the same query at a higher ranking due to the modified feature vector.

**Patentansprüche**

1.  System zum Einordnen eines Dokuments basierend auf Nutzerverhalten, umfassend:

    Mittel zum Bestimmen eines Merkmalsvektors, welcher mit einem Dokument assoziiert ist, wobei der Merkmalsvektor Gewichtungen für bestimmte Begriffe umfasst, welche in dem Dokument vorkommen; und
    Mittel zum Modifizieren des Merkmalsvektors für das Dokument basierend auf während einer Suchsitzung erfassten Nutzeraktionen derart, dass das Dokument als Antwort auf die Nutzeraktionen höher eingeordnet ist, **dadurch gekennzeichnet, dass** das System ferner Mittel zum Abfragen von Nutzersuchverhalten umfasst, wobei das Mittel zum Modifizieren ferner Mittel zum Aktualisieren des Merkmalsvektors von dem Dokument basierend auf dem abgefragten Nutzersuchverhalten derart umfasst, dass der Rang des Dokuments basierend auf dem abgefragten Nutzersuchverhalten geändert wird, wobei das Abfragen ferner Anweisungen zum Erzeugen eines Musters vom Nutzerverhalten umfasst, wobei das Muster vom Nutzerverhalten ferner einen Abfragemerkmalsvektor von den Begriffen einer bestimmten Abfrage und den Merkmalsvektor von dem einen oder der mehreren Dokumente umfasst, welche basierend auf der Abfrage zurück gegeben und durch den Nutzer angesehen wurden, und wobei das Erzeugen des Musters ferner Anweisungen zum Erzeugen eines Musters während einer Abfragefrequenz umfasst,

wobei das Aktualisieren ferner Anweisungen zum Kombinieren des Merkmalsvektors von dem Dokument mit einem Merkmalsvektor der Abfrage umfasst, wobei der Merkmalsvektor Frequenzwerte für einen oder mehrere Begriffe umfasst, welche in der Abfrage vorkommen,

wobei das Aktualisieren ferner Anweisungen zum Skalieren des Abfragemerkmalsvektors basierend auf der Ansichtszeit des Dokuments durch den Nutzer während des abgefragten Nutzerverhaltens umfasst, um einen skalierten Abfragemerkmalsvektor zu erzeugen,

wobei das Skalieren ferner Anweisungen zum Erzeugen eines negativen Skalierungsfaktors als Antwort auf eine kurze Ansichtszeit derart umfasst, dass der skalierte Abfragemerkmalsvektor negativ ist und der Merkmalsvektor von dem Dokument reduziert wird und der Rang des Dokuments reduziert wird, und

wobei das Skalieren ferner Anweisungen zum Erzeugen eines positiven Skalierungsfaktors als Antwort auf eine lange Ansichtszeit derart umfasst, dass der skalierte Abfragemerkmalsvektor positiv ist und der Merkmalsvektor von dem Dokument erhöht wird und der Rang des Dokuments erhöht wird.

2. System nach Anspruch 1, ferner umfassend Mittel zum Erfassen von Nutzeraktionen als Antwort auf eine Liste von Dokumenten, welche als Antwort auf eine Abfrage produziert wird, wobei die Nutzeraktionen Auswählen eines Dokuments aus der Liste von Dokumenten enthält.

3. System nach Anspruch 2, ferner umfassend Mittel zum Einstellen der Gewichtungen der Begriffe in dem Merkmalsvektor, die mit Begriffen in einer Abfrage übereinstimmen, welche die Liste von Dokumenten erzeugt hat, so dass die Einordnung des Dokuments als Antwort auf die Einstellung der Gewichtungen erhöht wird.

4. System nach Anspruch 1, ferner umfassend Mittel zum Zurückgeben desselben Dokuments an einen anderen Nutzer mit derselben Abfrage bei einer höheren Einordnung auf Grund des modifizierten Merkmalsvektors.

5. Verfahren zum Einordnen eines Dokuments basierend auf Nutzerverhalten, umfassend:

Bestimmen eines Merkmalsvektors, der mit einem Dokument assoziiert ist, wobei der Merkmalsvektor Gewichtungen für einen oder mehrere Begriffe umfasst, welche in dem Dokument vorkommen, und

Modifizieren des Merkmalsvektors für das Dokument basierend auf Nutzeraktionen, welche während einer Abfrage des Dokuments erfasst wurden, derart, dass das Dokument als Antwort auf die Nutzeraktionen höher eingeordnet wird,

**dadurch gekennzeichnet, dass** das Verfahren ferner Abfragen von Nutzersuchverhalten umfasst; und

wobei das Modifizieren des Merkmalsvektors für das Dokument ferner Aktualisieren des Merkmalsvektors von dem Dokument basierend auf dem abgefragten Nutzersuchverhalten derart umfasst, dass der Rang des Dokuments basierend auf dem abgefragten Nutzersuchverhalten geändert wird,

wobei das Abfragen ferner Erzeugen eines Musters vom Nutzerverhalten umfasst, wobei das Muster vom Nutzerverhalten ferner einen Abfragemerkmalsvektor von den Begriffen einer bestimmten Abfrage und den Merkmalsvektor von dem einen oder der mehreren Dokumente umfasst, welche basierend auf der Abfrage zurück gegeben und durch den Nutzer angesehen wurden,

wobei das Erzeugen des Musters ferner Erzeugen eines Musters während einer Abfragefrequenz umfasst,

wobei das Aktualisieren ferner Kombinieren des Merkmalsvektors von dem Dokument mit einem Merkmalsvektor der Abfrage umfasst, wobei der Merkmalsvektor Frequenzwerte für einen oder mehrere Begriffe umfasst, die in der Abfrage vorkommen,

wobei das Aktualisieren ferner Skalieren des Abfragemerkmalsvektors basierend auf der Ansichtszeit des Dokuments durch den Nutzer während des abgefragten Nutzerverhaltens umfasst, um einen skalierten Abfragemerkmalsvektor zu erzeugen,

wobei das Skalieren ferner Erzeugen eines negativen Skalierungsfaktors als Antwort auf eine kurze Ansichtszeit derart umfasst, dass der skalierte Abfragemerkmalsvektor negativ wird und der Merkmalsvektor von dem Dokument reduziert wird und der Rang des Dokuments reduziert wird, und

wobei das Skalieren ferner Erzeugen eines positiven Skalierungsfaktors als Antwort auf eine lange Ansichtszeit derart umfasst, dass der skalierte Abfragemerkmalsvektor positiv wird und der Merkmalsvektor von dem Dokument erhöht wird und der Rang des Dokuments erhöht wird.

6. Verfahren nach Anspruch 5, ferner umfassend Mittel zum Erfassen von Nutzeraktionen als Antwort auf eine Liste von Dokumenten, die als Antwort auf eine Abfrage erzeugt wird, wobei die Nutzeraktionen Auswählen eines Dokuments aus der Liste von Dokumenten enthalten.

7. Verfahren nach Anspruch 6, wobei das Modifizierungsmittel ferner Mittel zum Einstellen der Frequenzwerte der Begriffe in dem Merkmalsvektor umfasst, die mit Begriffen in einer Abfrage übereinstimmen, welche die Liste von Dokumenten erzeugt hat, so dass die Einordnung des Dokuments als Antwort auf die Einstellung der Frequenzwerte erhöht wird.

**8.** Verfahren nach Anspruch 5, ferner umfassend Zurückgeben desselben Dokuments an einen anderen Nutzer mit derselben Abfrage bei einer höheren Einordnung auf Grund des modifizierten Merkmalsvektors.


**Revendications**

**1.** Système de classement d'un document basé sur le comportement des utilisateurs, comprenant :

des moyens pour déterminer un vecteur de caractéristiques associé à un document, le vecteur de caractéristiques comprenant des poids pour certains termes qui apparaissent dans le document ; et
des moyens pour modifier le vecteur de caractéristiques pour le document sur la base d'actions d'utilisateur capturées durant une session de recherche de manière que le document soit classé plus hautement en réponse aux actions d'utilisateur,
**caractérisé en ce que** le système comprend en outre des moyens pour échantillonner un comportement de recherche d'utilisateur,
les moyens de modification comprennent en outre des moyens pour actualiser le vecteur de caractéristiques du document sur la base du comportement de recherche d'utilisateur échantillonné de manière que le rang du document soit changé sur la base du comportement de recherche d'utilisateur échantillonné,
l'échantillonnage comprend en outre des instructions pour générer un échantillon du comportement d'utilisateur dans lequel l'échantillon du comportement d'utilisateur comprend en outre un vecteur de caractéristiques d'interrogation des termes dans une interrogation particulière et le vecteur de caractéristiques des un ou plusieurs documents renvoyés sur la base de l'interrogation et visionnés par l'utilisateur, et
la génération d'échantillons comprend en outre des instructions pour générer un échantillon durant une fréquence d'échantillonnage,
l'actualisation comprend en outre des instructions pour combiner le vecteur de caractéristiques du document avec un vecteur de caractéristiques de l'interrogation, le vecteur de caractéristiques comprenant des valeurs de fréquence pour un ou plusieurs termes qui apparaissent dans l'interrogation,
l'actualisation comprend en outre des instructions pour pondérer le vecteur de caractéristiques d'interrogation sur la base du temps de visionnage du document par l'utilisateur durant le comportement d'utilisateur échantillonné pour générer un vecteur de caractéristiques d'interrogation pondéré,
la pondération comprenant en outre des instructions pour générer un facteur d'échelle négatif en réponse à un temps de visionnage court de manière que le vecteur de caractéristiques d'interrogation pondéré soit négatif et le vecteur de caractéristiques du document soit diminué et le rang du document soit diminué, et
la pondération comprend en outre des instructions pour générer un facteur d'échelle positif en réponse à un temps de visionnage long de manière que le vecteur de caractéristiques d'interrogation pondéré soit positif et le vecteur de caractéristiques du document soit augmenté et le rang du document soit augmenté.

**2.** Système selon la revendication 1, comprenant en outre des moyens pour capturer des actions d'utilisateur en réponse à une liste de documents produite en réponse à une interrogation dans laquelle les actions d'utilisateur comprennent une sélection d'un document à partir de la liste de documents.

**3.** Système selon la revendication 2, comprenant en outre des moyens pour ajuster les poids des termes dans le vecteur de caractéristiques qui correspondent à des termes dans une interrogation qui a produit la liste de documents de manière que le classement du document soit supérieur en réponse à l'ajustement des poids.

**4.** Système selon la revendication 1, comprenant en outre
des moyens pour renvoyer le même document à un autre utilisateur avec la même interrogation à un rang supérieur en raison du facteur de caractéristiques modifié.

**5.** Procédé de classement d'un document fondé sur le comportement des utilisateurs, comprenant :

la détermination d'un vecteur de caractéristiques associé à un document, le vecteur de caractéristiques comprenant des poids pour un ou plusieurs termes qui apparaissent dans le document ; et
la modification du vecteur de caractéristiques pour le document sur la base d'actions d'utilisateur capturées durant une interrogation du document de manière que le document soit classé plus hautement en réponse aux actions d'utilisateur,

**caractérisé en ce que** le procédé comprend en outre l'échantillonnage d'un comportement de recherche d'utilisateur ; et

la modification du vecteur de caractéristiques pour le document comprend en outre l'actualisation du vecteur de caractéristiques du document sur la base du comportement de recherche d'utilisateur échantillonné de manière que le rang du document soit changé sur la base du comportement de recherche d'utilisateur échantillonné,

l'échantillonnage comprend en outre la génération d'un échantillon du comportement d'utilisateur dans lequel l'échantillon du comportement d'utilisateur comprend en outre un vecteur de caractéristiques d'interrogation des termes dans une interrogation particulière et le vecteur de caractéristiques des un ou plusieurs documents renvoyés sur la base de l'interrogation et visionnés par l'utilisateur,

la génération d'échantillons comprend en outre la génération d'un échantillon durant une fréquence d'échantillonnage,

l'actualisation comprend en outre la combinaison du vecteur de caractéristiques du document avec un vecteur de caractéristiques de l'interrogation, le vecteur de caractéristiques comprenant des valeurs de fréquence pour un ou plusieurs termes qui apparaissent dans l'interrogation,

l'actualisation comprend en outre la pondération du vecteur de caractéristiques d'interrogation sur la base du temps de visionnage du document par l'utilisateur durant le comportement d'utilisateur échantillonné pour générer un vecteur de caractéristiques d'interrogation pondéré,

la pondération comprenant en outre la génération d'un facteur d'échelle négatif en réponse à un temps de visionnage court de manière que le vecteur de caractéristiques d'interrogation pondéré soit négatif et le vecteur de caractéristiques du document soit diminué et le rang du document soit diminué, et

la pondération comprend en outre la génération d'un facteur d'échelle positif en réponse à un temps de visionnage long de manière que le vecteur de caractéristiques d'interrogation pondéré soit positif et le vecteur de caractéristiques du document soit augmenté et le rang du document soit augmenté.

6. Procédé selon la revendication 5, comprenant en outre des moyens pour capturer des actions d'utilisateur en réponse une liste de documents produite en réponse à une interrogation dans laquelle les actions d'utilisateur comprennent une sélection d'un document à partir de la liste de documents.

7. Procédé selon la revendication 6, dans lequel les moyens de modification comprennent en outre des moyens pour ajuster les valeurs de fréquence des termes dans le vecteur de caractéristiques qui correspondant à des termes dans une interrogation qui a produit la liste de documents de manière que le classement du document soit supérieur en réponse à l'ajustement des valeurs de fréquence.

8. Procédé selon la revendication 5, comprenant en outre
le renvoi du même document un autre utilisateur avec la même interrogation à un rang supérieur en raison du vecteur de caractéristiques modifié.

20

26

WS₁

WS₂

.
.
.

WSₙ

24

22

30
CPU

MEMORY

34

SEARCH 36
ENGINE

32

28

40

48

50

52

42

54

44

46

FIG. 1

36

QUERY

60
DOCUMENT
MATCHER

64
DOCUMENT
RANKER

LIST OF
RANKED
DOCUMENTS

62
DOCUMENT
INDEX

FIG. 2

70

72

START

RECEIVE QUERY TERMS

74

RETRIEVE
MATCHING
DOCUMENTS

76

RANK
DOCUMENTS

78

RETURN LIST OF
RANKED DOCUMENTS

END

FIG. 3

90

START

92

CALCULATE Rs

94

CALCULATE Rfw

96

RANK = f(Rs,Rfw)

END

FIG. 4

100

102

START

SELECT FEATURE
SELECTION TERMS
(WORDS & PHRASES)

104

ASSIGN WEIGHT
TO EACH TERM

106

GENERATE FEATURE
VECTOR WITH HIGHEST
WEIGHTS

108

GENERATE FEATURE
VECTOR FOR QUERY

110

CALCULATE DISTANCE
BETWEEN QUERY TERM
AND FEATURE VECTOR

112

UPDATE DOCUMENT
FEATURE VECTOR BASED
ON USER ACTIONS

END

FIG. 5

112

START

114

CAPTURE USER
BEHAVIOR

116

UPDATE DOCUMENT
FEATURE VECTOR

END

FIG. 6

**REFERENCES CITED IN THE DESCRIPTION**

**Patent documents cited in the description**

- JP 2000242647 A
- US 5855015 A
- US 5899999 A
- US 5987457 A

**Non-patent literature cited in the description**

- IMPROVING RETRIEVAL PERFORMANCE BY RELEVANCE FEEDBACK. **SALTON et al.** JOURNAL OF THE AMERICAN SOCIETY FOR INFORMATION SCIENCE. AMERICAN SOCIETY FOR INFORMATION, June 1990, vol. 41, 288-297
- **Yang, Y. ; Pedersen, J.O.** A Comparative Study on Feature Selection in Text Categorization. *Proc. of the 14th International Conference on Machine Learning ICML97,* 1997, 412-420
- **Salton, G. ; Wong, A. ; Yang, S.S.** A vector space model for automatic indexing. *Communications of the ACM,* 1975, vol. 18, 613-620
- **Salton, G. ; C. Burkley.** Term-Weighting Approaches in Automatic Text Retrieval. *Information Processing and Management,* 1988, vol. 24 (5), 513-523